# EUROPEAN PATENT SPECIFICATION

(11) **EP 4 291 538 B1**
(45) Date of publication and mention of the grant of the patent: **23.04.2025**
(21) Application number: 22706392.2
(22) Date of filing: 09.02.2022
(51) Int. Cl.: C02F 9/00, C02F 1/46, C02F 1/461, C02F 1/467, C02F 1/469, C02F 103/08, C02F 1/44, C02F 1/68

(54) **DESALINATION DEVICE AND PROCESS FOR RECOVERY AND VALORISATION OF CHLORIDES IN DILUTE SOLUTIONS**
ENTSALZUNGSVORRICHTUNG UND VERFAHREN ZUR RÜCKGEWINNUNG UND VERWERTUNG VON CHLORIDEN IN VERDÜNNTEN LÖSUNGEN
DISPOSITIF DE DESSALEMENT ET PROCÉDÉ DE RÉCUPÉRATION ET DE VALORISATION DE CHLORURES DANS DES SOLUTIONS DILUÉES

(30) Priority: 10.02.2021 IT 202100002963
(43) Date of publication of application: 20.12.2023
(73) Proprietor: Genio Srl, 20121 Milano (MI) (IT)
(72) Inventor: CAVALLI, Stefano, 37019 Peschiera del Garda (VR) (IT); TREVISAN, Marco, 37019 Peschiera del Garda VR) (IT)
(74) Representative: Münchow, Vera Ute Barbara
(86) International application number: PCT/IB2022/051149
(87) International publication number: WO 2022/172166

(56) References cited:
- EP-B1- 3 250 516
- US-A1- 2010 140 103
- US-A1- 2010 200 425
- US-A1- 2014 311 897
- US-B2- 10 604 426

## Description

### TECHNICAL FIELD

The present invention relates to a desalination device and process for the recovery and valorisation treatment of chlorine-containing solutions from industrial, mining or water treatment wastes, including marine brines, by way of non-limiting example, for the production of disinfectants and the sequestration of atmospheric CO₂, for example.

### PRIOR ART

The reduction of chloride levels below the levels permitted for spillage into surface water (generally in the order of 1,000 ppm) is one of the main issues in the field of water treatment, since chlorides, unlike other elements or compounds such as calcium, magnesium, sulphates, and so forth, cannot be treated in physical-chemical plants by exploiting poorly soluble salts, oxides, hydroxides or flocculating agents.

However, chlorine salts, i.e. chlorides, are one of the most common pollutants of waste water from industrial processes (the food, textile, metal treatment and galvanic industries, etc.), mining, oil extraction (fracking) and, last but not least, form activities related to the desalination of marine water for the production of potable water for human consumption.

To date, the most commonly used methods for chloride abatement below the permitted limits for spillage into surface water depend strongly on their level of chloride concentration. In the case of levels close to the threshold (<5,000 ppm), generally the wastewater is mixed with other wastewater with a low chloride content and then undergoes chemical and physical treatment of the resulting mixture. For concentrations above 70,000 ppm, the only applicable technologies involve evaporation methods that make it possible to recover a volume of water by concentrating it until it (possibly) reaches saturation, with a subsequent solid recovery of chlorine salts. In the case of intermediate concentrations between 5,000 and 70,000 ppm, the method normally consists in applying, in series, a purification by means of osmotic membrane and consequently an evaporative recovery of the concentrated osmotic rejection.

Needless to say, given the high plant and energy costs related to reverse osmosis and evaporation treatments, it is not uncommon to see fraudulent phenomena of environmental spillage or relocation, where possible, to countries with inadequate environmental regulations that permit spillage into surface water.

A further method developed in the early 2000s and marketed by the Applicant under the name SMIT is the subject matter of the European patent EP 3 250 516, and provides for the use of an electrochemical apparatus to extract the chlorine salts dissolved in an aqueous solution while simultaneously producing an aqueous solution depleted of chlorine salts and two chemical compounds, one of which is hydrochloric acid HCl and the other a base, by an inverse acid-base neutralisation process. The process disclosed in the aforementioned patent provides for the use of two electrodes enriched with a catalyst that, by supplying the cell with atmospheric oxygen and hydrogen, makes it possible to obtain two chemical reactions on the surfaces of the electrodes that result in the production on one side of H⁺ ions and on the other of OH⁻ ions. Due to the principle of electro-neutrality of the aqueous solutions, the increase in the concentration of these ionic species in the chamber containing the two electrodes involves the displacement of the charged ionic species contained in the treated brine through dedicated anion and cation membranes with consequent sequestration thereof.

Despite the great advantage introduced by this technology given by the fact that it is possible to obtain a chemical valorisation of treated brines and a consequent production of electric energy from the electrochemical process involved, this technology has several problems, summarised here below:
The high cost of the catalysts used for the production of the electrodes (such as platinum oxides) implies a high initial outlay for the construction of a plant that makes its application possible only in the event that the treated wastewater entails very high disposal costs. The solutions produced, both acidic and basic, cannot be produced at a desired concentration since the pH of the two solutions must be kept above 1 in the case of the acidic solution and below 13 in the case of the basic solution.

The use of a spontaneous reaction does not make it possible to control the production rate of H⁺ and OH ions, ⁻since this process is directly proportional to the electrical conductivity of the treated brine. This phenomenon involves a decrease in the production rate of ions as the salinity of the treated brine decreases, thus making this type of technology economically uncompetitive in the case of brines containing less than 35,000 ppm of chlorides.

Finally, the need to supply the cell with hydrogen gas requires that a SMIT type plant be flanked by a plant for the *in situ* production of hydrogen. These plants can be built using water electrolysis technology or reforming of fossil and non-fossil hydrocarbons. This does not determine a limit in the case of applications in zones close to urbanised areas; however, it does represent a technical limit in the case in which the area involved for the realisation of the plants is not equipped for the management of constant supplies of hydrocarbons.

The desalination system described in WO 2016/120717 A1 works with diffusion electrodes and oxidises at H₂ the anode to form H⁺ and reduces O₂ at the cathode to form OH⁻ to turn brackish water into drinking water. US 2010/0200425 A1 describes a water electrolysis system and method. Further relevant prior art documents are US 2010/140103 A1, US 10 604 426 B2, US 2014/311897 A.

### DISCLOSURE OF THE INVENTION

The object of the invention is to overcome the aforementioned drawbacks and to propose a device and a process for the recovery and valorisation of chlorides in dilute solutions, in particular brines with chloride concentrations that can be lower than 35,000 ppm and higher than 5,000 ppm.

The invention also has the object of proposing a device and a process for the recovery treatment of solutions containing chlorides with low management and investment costs and which can valorise the treated compounds chemically.

Further purposes or advantages of the invention will be apparent from the following description. In a first aspect of the invention, the object is achieved by means of a desalination device as defined in claim 1.

Advantageously, said membranes are made of reinforced polymeric material, in particular polyketones (PK). Materials for membranes can be different; they must simply be suitable for the permeabilities specified above. The person skilled in the art can easily identify suitable membranes.

In a preferred embodiment of the invention, the desalination device (i.e. the relative control unit adapted to manage its various components included in the device) is configured to perform the following algorithm:
(i) feeding the anode chamber (14; 114) via the system for feeding said anode chamber with anolyte, preferably water;
(ii) feeding the cathode chamber (16; 116) via the system for feeding said cathode chamber with the catholyte, preferably water, or the base produced therein at reduced concentration;
(iii) feeding the third chamber (12; 112) with a concentrated chloride salt solution;
(iv) oxidation of OH⁻ on the anode (18) with the formation of oxygen O₂ and H⁺ protons;
(v) reduction of H⁺ on the cathode (20) with the formation of H₂ hydrogen and OH⁻ hydroxide ions.

The anion membrane retains within the anode acidification chamber the protons H⁺, making possible, however, the transit of negative ions such as the chloride ion Cl⁻ from the central chamber. The central chamber is preferably made in such a way as to allow the transit of the treated saline solution and to maximise the residence time of the same within the chamber while minimising the active surface area used. The active surface is intended as the two walls of the chamber delimited respectively by the anion membrane and the cation membrane. Conversely, the cation membrane retains the OH ⁻ ions within the basic production cathode chamber, while nevertheless allowing the transit of positive ions such as the sodium ion Na⁺ from the central chamber.

In order to ensure continuity of electrochemical reactions and migration of salt ions from the solution to be treated in the anode chamber and in the cathode chamber, in said desalination device according to the invention each of said chambers is preferably provided with an inlet and an outlet, specifically:
(a) the anode chamber is provided with an inlet for the fresh anolyte and an outlet for the more acidic anolyte enriched with saline anions, in particular Cl⁻ or derivatives thereof, and oxygen;
(b) the cathode chamber is provided with an inlet for the fresh catholyte and an outlet for the more basic catholyte enriched with salt cations, in particular Na⁺ and hydrogen; and
(c) the third chamber is provided with an inlet for the initial salt solution and an outlet for the reduced concentration salt solution.

In a particularly advantageous embodiment of the invention, the desalination device further comprises:
(g) a gas-liquid separation device, in particular a gas-liquid scrubber, adapted to recover the hydrogen produced which is connected to the outlet of the cathode chamber and which is preferably connected to a fuel cell.

A gas-liquid separation device makes it possible to recover the share of hydrogen produced from the base production chamber, thus in the cathode chamber, in order to reuse it *in situ,* for example, for the production of electricity by means of a fuel cell. The electric energy produced can be used immediately to power the electrochemical cell of the desalination device, resulting in a reduction of the power necessary to feed it by up to 15% from a direct source. Other gas-liquid separation systems are also known in the state of the art.

According to the invention, the desalination device further comprises:
(h) a carbonation reactor with the cathode chamber comprising an inlet and an outlet which are connected to a circuit into which said carbonation reactor is inserted.

The carbonation reactor advantageously diffuses a gas containing carbon dioxide within the basic solution produced and circulates in a circuit between the cathode chamber and the carbonation reactor. This procedure allows the pH of the basic solution to remain buffered, advantageously between 8.5 and 9.5, ensuring optimal operation and durability of the membranes. By maintaining the buffered pH it is also possible to increase the concentration of reagent taken from the treatment solution, until a solution of saturated carbonates is obtained which can then be taken continuously from the solution by way of precipitation. When fed with atmospheric air, the reactor helps to reduce its CO₂ charge. The carbonation reactor therefore has the dual purpose of maintaining the pH of the basic solution in the cathode chamber buffered and of allowing the sequestration of atmospheric carbon dioxide through the production of solid carbonates and bicarbonates that can be extracted from the solution by crystallisation through supersaturation.

Advantageously, the fresh anolyte is simply water or a solution with a pH close to 7, while the fresh catholyte advantageously is a diluted basic solution, preferably coming from the NaOH recirculation produced in the cathode chamber and buffered during passage through a decarbonation reactor. The fresh salt solution is advantageously a concentrated NaCl solution. These fresh solutions then undergo chemical reactions, as in the anode chamber:

2 OH⁻ → O₂ (g) + 2 H⁺ + 4 e⁻

and in the cathode chamber:

2 H₃O⁺ + 4 e⁻ → 2 OH⁻ + 2 H₂ (g).

An acid is then formed in the anode chamber and a base in the cathode chamber.

An electrochemical cell suitable for use in the desalination device according to the invention preferably comprises:
(i) a first plate supporting in a first window applied to said first plate said anode chamber of meandering path having a thickness with respect to the plane of the meandering path extension preferably not exceeding 6 mm and having an inlet and an outlet for the anolyte at its ends;
(ii) a second plate supporting in a second window applied in said second plate said central chamber of meandering path with a thickness with respect to the plane of the extension of the meandering path which preferably does not exceed 6 mm and with an inlet and an outlet for the saline solution at its ends; and
(iii) a third plate supporting in a third window applied to said third plate said cathode chamber of meandering path with a thickness with respect to the plane of the extension of the meandering path that preferably does not exceed 6 mm and with an inlet and an outlet for the catholyte at its ends,
(iv) said anion exchange membrane interposed between said first and said second plates;
(v) said cation exchange membrane interposed between said second and said third plate;
(vi) a plate anode disposed next to said first plate on the side opposite the position of the anion exchange membrane; and
(vii) a plate cathode disposed next to said third plate on the side opposite the position of the anion exchange membrane;

wherein plates, membranes and electrodes are superimposed in the following order: anode, anode chamber, anion exchange membrane, central chamber, cation exchange membrane, cathode,
wherein each plate is optionally provided with a plurality of first holes arranged such that with the overlapping of the plates they are aligned so that they can be connected with relevant fixing means;
wherein each plate is provided with a plurality of second holes divided into three pairs of holes for conveying the flows of anolyte, catholyte and saline solution into separate channels, one hole of each pair provided for the entry of the respective flow into the system and the other hole for the exit from the system where the corresponding holes are arranged in such a way that with the overlapping of the plates they are aligned so that they can be connected to form separate channels for the relative flows,
wherein each plate is preferably provided with a plurality of third holes for the collection of gases formed respectively in the anode and cathode chamber and arranged such that with the overlapping of the plates they are aligned so that they can be connected to form separate channels for the relative gas flows of the respective chambers,
wherein each flow passes through the entire system along the channel formed by the relative overlapping holes, but a communication with the inlet of the chamber is realised only in the plate which carries the chamber to which the relative channel flow is dedicated, in such a way as to allow the flow to pass through the chamber and enter through the outlet of the chamber into the corresponding outlet channel formed by the respective series of holes.

The realisation of the electrochemical cells in the form of three plates with meandering or serpentine chambers makes it possible to have a maximum surface, hence a maximum contact surface between each chamber and the relative ion exchange membrane, with a minimum of thickness or volume of the chambers themselves, a practically laminar extension of the chambers obtaining a uniform and homogeneous distribution of the corresponding solutions contained therein and guaranteeing regular degassing. The meandering shape makes it possible to create a long path of solutions inside each chamber in a very small space.

In combination with an optimized contact surface, this space saving makes possible the reduction of the area of the membranes needed to separate the individual cells, a highly significant fact in view of the high costs for membranes.

Plate electrochemical cells can be supplemented with additional plates creating stacks of cells that can be applied in desalination devices according to the invention, but also in other contexts that require different solutions and types of electrodes, while still working with the three-chamber principle of the smallest unit of the stack.

In a variant of the invention, a plurality of three-chamber electrochemical cells are grouped in a stack of cells according to:
variant (A) wherein the individual elements follow each other according to the following scheme:
[+AZC-][+AZC-]ₙ with n = 1, 2, ...,;

OR according to:
the variant (B) in which the individual elements follow each other according to the following scheme:
+AZC-CZA+AZC-CZA+.....+AZC- with variable number of groups AZC and CZA wherein units with three adjacent chambers have the corresponding electrode in common,
wherein for both variants (A) and (B), A is a plate with anode chamber, Z is a plate with central chamber, C is a plate with cathode chamber, the sign "+" an anode and the sign "-" a cathode, between adjacent chambers A and Z an anion exchange membrane is placed and between adjacent chambers Z and C a cation exchange membrane; and
wherein for both variants (A) and (B) the chambers of the same kind are connected through the relative inlets and outlets of the chambers and corresponding holes in the plates.

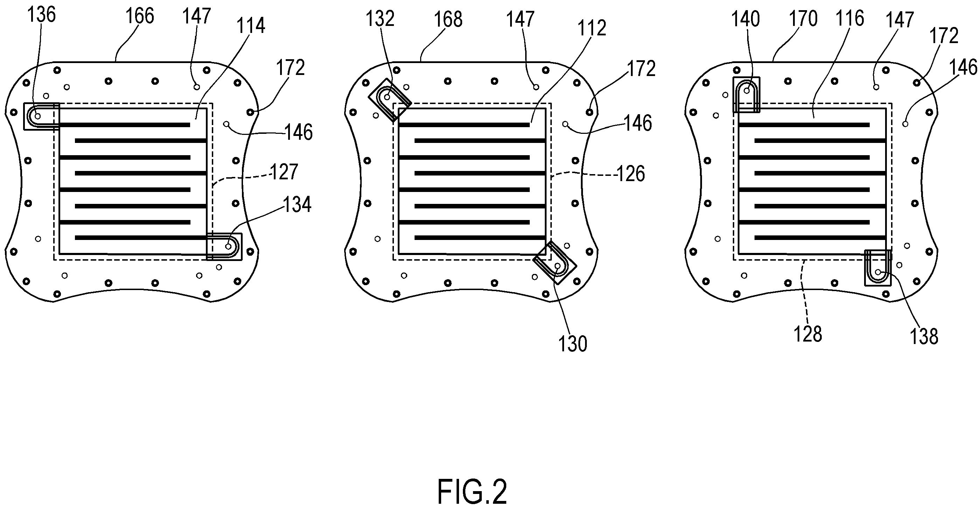

The principle of plate electrochemical cells is illustrated later with reference to Figure 2, wherein the configurations (number and arrangement) of the holes for connecting the inputs and outputs of the individual chambers may vary.

In an embodiment according to the invention for exploiting the technology on a large scale, the desalination device comprises not only at least one electrochemical cell but a plurality thereof, for example 50, in a multipolar configuration in a stack containing the alternating polarity cells. Advantageously, the active surface of the membranes and electrodes is approximately 1600 cm². The cell can be fed through a direct current generator at a voltage comprised between 0 and 9 Volts. In a preferred version of the invention, the cell is supplied with a constant voltage between 2.5 and 3.5 V and a current between 4.5 and 6.5 mA/cm² for each cell, for example through a photovoltaic system and a voltage stabiliser or through a direct current generator supplied by the mains voltage. Alternatively or in a supplementary form, it may be powered by the energy produced by the above-mentioned fuel cell. The amperage depends on the conductivity of the brine treated. For the same voltage, a brine less rich in salts produces a lower current and the above range can thus be extended to 0.5 - 6.5 mA/cm².

The flow of the saline solution to be treated is preferably kept stable within the central chamber of each cell, this in exemplary form through the use of peristaltic metering pumps that can be controlled using a Programmable Logic Controller (PLC) by monitoring the conductivity of the solution analysed at the point where it leaves the cell. Also inside the anode and cathode chamber, advantageously, a flow of anolyte/catholyte, such as a water flow, is kept stable, for example through the use of peristaltic metering pumps managed via PLC by monitoring the pH of the same solutions analysed at the point where they exit the cell.

In this regard, the desalination device according to the invention comprises adjustable speed pumping systems for feeding said chambers.

By controlling the pumping speed of the solution to be treated and the voltage applied to the cell, it is possible to carry out a continuous dynamic control of its desalination capacity, ensuring that a solution containing a level of chlorides consistent with the required values is available at the exit from the central chamber.

In an alternative embodiment of the invention, the desalination device further comprises a reverse osmosis system for dividing the solution exiting the central chamber into a fresh water fraction and a fraction of a concentrated saline solution which feeds in a circuit the central chamber of the electrochemical cell and wherein, preferably, the reverse osmosis plant is fed not just from the saline solution exiting the central chamber but also by brackish water. The brackish water has a salinity equal to or at least similar to that of the solution leaving the central chamber to withdraw an additional portion of potable water.

In the treatment of marine water, for example, this configuration makes possible the recovery of 100% of the water withdrawn as drinking water with zero discharge. This configuration is not the only one applicable. For example, in the case of industrial water treatment the electrochemical cells are used to lower the chloride levels below the one allowed for spillage into surface water.

A further aspect of the invention relates to a process for desalination comprising the following steps:
(a) providing a desalination device according to the invention;
(b1) feeding of the anode chamber with an anolyte, preferably water;
(b2) feeding the cathode chamber with a catholyte, preferably water or the base produced therein at reduced concentration;
(b3) feeding of the third chamber with a concentrated chloride salt solution;
(c1) oxidation of OH⁻ on the anode with the formation of oxygen O₂ and H⁺;
(c2) reduction of H⁺ on the cathode with formation of hydrogen H₂ and OH⁻ hydroxide ions;
(d1) in response to the increase in the concentration of H⁺ ions in the anode chamber, passage of salt anions, particularly chlorides, from the third chamber into the anode chamber ;
(d2) in response to the increased concentration of OH⁻ ions in the cathode chamber, passage of salt cations, particularly Na⁺, from the third chamber into the cathode chamber; wherein
carbonates and bicarbonates (56) are diverted from said carbonation reactor with the effect of buffering the pH of the basic solution which returns to the cathode chamber (16), preferably at values between 8.5 and 9.5.

The process uses an electrochemical cell or a stack of electrochemical cells as illustrated above to lower the salt content of a concentrated saline solution and simultaneously to produce oxygen and hydrogen. As regards hydrogen, which cannot be contaminated by other gases, it can be used for energy production. Conversely, the oxygen in the anode chamber can be contaminated with chlorine by the anodic oxidation of Cl⁻. The base produced in the cathode chamber can be used to capture CO₂ from the atmosphere and produce carbonates and bicarbonates. The carbonation simultaneously transforms the concentrated base into a dilute base solution to be reintroduced into the cathode chamber, thus avoiding the need to introduce fresh catholyte.

In an embodiment of the process according to the invention,
(i) the anode chamber is fed at a controlled flow rate (with an acidic solution) and acidic solutions containing oxygen are extracted from it;
(ii) the cathode chamber is fed at a controlled flow rate with a basic solution (NaOH) and concentrated basic solutions and hydrogen are extracted from it; and
(iii) the central chamber is fed at a controlled rate by concentrated saline solutions and diluted salt solutions are extracted. The control of speed makes it possible to monitor the concentrations of the components of the aqueous solutions contained in the relative chambers.

According to the invention, the feeding of the cathode chamber and the extraction of its contents take place in a circuit from which the hydrogen is diverted, preferably by feeding a fuel cell, and comprising a carbonation reactor from which carbonates and/or bicarbonates are diverted with the effect of buffering the pH of the basic solution returning to the cathode chamber, preferably at values between 8.5 and 9.5. The energy produced in the fuel cell may be used to power the desalination device.

Further aspects of the invention relate to the use of the device and desalination process, in particular for reducing the concentration of chlorides in brackish water, industrial, mining or water treatment waste, in marine water according to the invention, and further for one or more purposes selected from the group consisting of:
- production of carbonates and/or bicarbonates;
- elimination of CO₂ from the atmosphere;
- production of hydrogen to produce energy.

The features and advantages disclosed for one aspect of the invention may be transferred *mutatis mutandis* to other aspects of the invention.

The industrial applicability is obvious from the moment when it becomes possible to reduce the concentration of chlorides from brackish water, marine water, industrial waste etc., even for chloride concentrations below 35,000 ppm in an economical way while being able at the same time to use the by-products such as hydrogen, NaOH to produce energy and carbonates/bicarbonates, and to reduce the carbon footprint in the environment.

Said purposes and advantages will be further highlighted during the description of preferred embodiment examples of the invention provided by way of non-limiting example only.

Variant and further features of the invention are the subject matter of the dependent claims. The description of preferred embodiments of the device, process, and uses relating to desalination and recovery and valorisation of chlorides contained in dilute solutions according to the invention is given by way of non-limiting example only with reference to the accompanying drawings. In particular, unless specified otherwise, the number, shape, dimensions and materials of the system and of the individual components may vary, and equivalent elements may be applied without deviating from the scope of the appended claims.

### DESCRIPTION OF PREFERRED EMBODIMENT EXAMPLES

- Fig. 1: illustrates a schematic diagram of a desalination device according to the invention.
- Fig. 2: illustrates individual elements of an electrochemical cell usable in the device according to Figure 1.

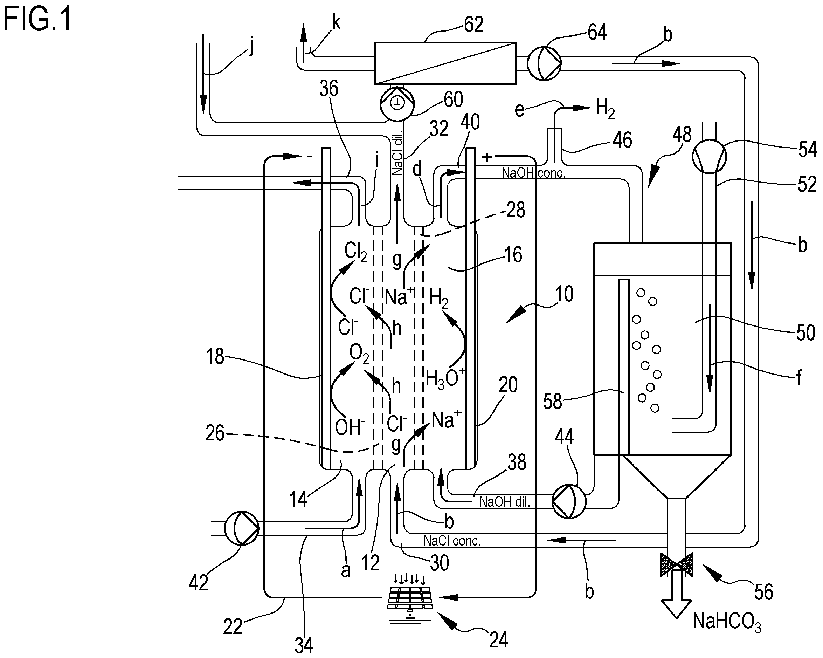

Figure 1 illustrates a schematic diagram a desalination device according to the invention. The plant contains as a central element an electrochemical cell **10** comprising a central chamber **12,** an anode chamber **14** and a cathode chamber **16.** The anode chamber **14** contains an electrode, i.e. the anode **18.** The corresponding electrode, the cathode **20,** is located in the cathode chamber **16.** The electrodes **18, 20** are connected by a circuit **22** powered by a photovoltaic cell **24.** The electrons move from the negative electrode **18** to the positive electrode **20.** The anode chamber **14** is separated by an anion exchange membrane **26** from the central chamber **12,** while the cathode chamber **16** is separated from the central chamber **12** by a cation exchange membrane **28.** Each of the three chambers **12, 14** and **16** is provided with an inlet and an outlet, the central chamber **12** of the inlet **30** and the outlet **32,** the anode chamber **14** of the inlet **34** and the outlet **36** and the cathode chamber **16** of the inlet **38** and the outlet **40.** Water (arrow **a**) is pumped by a pump **42** through the inlet **34** into the anode chamber **14.** The central chamber **12** is fed through the inlet **30** with a concentrated NaCl solution (arrow **b**), for example 70 g NaCl/l. With a pump **44** a diluted basic aqueous solution, here NaOH with a concentration of 0.1 M, is pumped (arrow **c**) through the inlet **38** into the cathode chamber **16.** At cathode **20,** H₃O⁺ cations are reduced to form hydrogen H₂ according to reaction 2 H₃O⁺ + 4 e⁻ → 2 OH⁻ + 2 H₂ (g). The basicity of the solution in the cathode chamber **16** is then increased. The NaOH solution, which leaves (arrow **d**) the cathode chamber **16** via the outlet **40,** is thus more concentrated (here 1M). At the same time, the hydrogen formed exits (arrow **e**) via the outlet **46** separating it from the aqueous NaOH flow which is managed in a circuit **48** connecting the inlet **38** and the outlet **40** of the cathode chamber **16.** A carbonation reactor **50** is installed in circuit **48,** the concentrated NaOH solution leaving the cathode chamber **16** enters the reactor **50** which is fed (arrow **f**) through a line **52** with the help of a pump **54** with a gas (i.e. air) containing carbon dioxide CO₂ that bubbles in the reactor **50.** From the reaction between NaOH and CO₂ in water respectively, sodium carbonate and/or bicarbonate are formed and can be discharged via an outlet **56** from the reactor **50.** The reactor **50** has a separator wall **58** for separating the formation of the solid carbonate/bicarbonate salts from the circuit **48.**

In the anode chamber **14** OH⁻ ions are oxidised to form oxygen O₂ according to reaction 4 OH⁻ → 4 e⁻ + 2 H₂O + O₂ (g). The aqueous solution results in a lower pH as the H₃O⁺ ion concentration increases.

The concentrated NaCl solution introduced into the central chamber **12** is diluted as reactions occur at the electrodes **18, 20** because the Na⁺ cations cross (arrows **g**) the cation exchange membrane **28** reacting to the increase in the concentration of OH⁻, while Cl⁻ anions cross (arrows **h**) the anion exchange membrane **26** reacting to the increase in the concentration of H₃O⁺. At the outlet **32** of the central chamber **12,** a dilute NaCl solution of about 35 g/l exits. The Cl⁻ ions entering the anode chamber **14** are oxidised at anode **18** forming Cl₂ chlorine. Chlorine reacts with water to form HCl and HClO, here about 1 molar, and exits (arrow i) from outlet **36.**

The diluted saline solution exiting the central chamber **12** is admixed with brine of similar concentration (arrow **j**) and pumped with a pump **60** into a reverse osmosis plant **62** from which a fresh water fraction (arrow **k**) and a concentrated NaCl solution fraction (70 g/L) are obtained and pumped with a pump **64** into the central chamber **12** forming the NaCl flow (arrow **b**).

Figure 2 illustrates individual elements of an electrochemical cell usable in the plant according to Figure 1. From left to right can be observed a first plate **166** with an anode chamber **114,** a second plate **168** with a central chamber **112,** and a third plate **170** with a cathode chamber **116.** Each chamber follows a meandering or serpentine path.

In a three-chamber base cell which stands alone or in an isolated form according to the above variants (A) or (B) in a succession of a plurality of three-chamber units, an anion exchange membrane **127** is at all times interposed between the anode chamber **114** and central chamber **112** and between the central chamber **112** and cathode chamber **116** a cation exchange membrane **128.** In the left-hand plate **166** the reference number **127** indicates the anion exchange membrane placed above the anode chamber **114;** in the plate **170** on the right the reference number **128** indicates the cation exchange membrane placed above the cathode chamber **116,** while in the plate **168** in the centre the reference number **126** indicates the set of the anion and cation exchange membranes (also represented individually in the drawings on the side) that include the central chamber **112** as in a sandwich.

By placing the second plate **168** above the first plate **166** and the third plate **170** above the second plate **168** with the anion exchange membrane **127** between the first **166** and second **168** plate, and the cation exchange membrane **128** between the second **168** and third **170** plate, a base electrochemical cell is obtained. To connect one plate to the other, a plurality of holes **172** is provided along the edge of each plate that serve to pass relative fixing means. By repeating the construction of electrochemical cells several times and placing one cell on top of the other, according to the sequences illustrated above, a stack of electrochemical cells is obtained that can be connected to work together. In this regard, each plate is provided with two three-hole assemblies, one for the outlets of the relative chambers **114, 112** and **116,** and one for the inlets of the relative chambers. The anode chamber **114** of the first plate **166** connects at its ends to the outlet hole **136** and to the inlet hole **134;** the central chamber **112** connects at its ends to the outlet hole **132** and to the inlet hole **130;** and the cathode chamber **116** connects at its ends to the outlet hole **140** and to the inlet hole **138.** Thus, in a stack of electrochemical cells, the outlets and inlets of the individual chambers are connected together, creating a unique flow of anodic solution, saline solution and cathodic solution between the chambers of the same category (anodic, central or cathodic).

Furthermore, there are holes **146, 147** on each plate that can be aligned in the stack that serve for the degassing of the anode and cathode chambers where gases are produced, in particular in the case of the connected cathode chambers **116,** the relative holes **146** serve to create channels to convey the hydrogen formed.

The plates are made in the form of chips and have, by way of example, a thickness of approximately 6 mm.

## Claims

1. Desalination device comprising at least one electrochemical cell (10) comprising:
(a) an anode (18) suitable for allowing the electrochemical reaction of oxidation of the OH⁻ ion and consequent production of oxygen gas and release in solution of protons H⁺ wherein said anode (18) is contained in an anode chamber (14; 114) suitable for containing or containing as an anolyte an acidic solution;
(b) a cathode (20) connected through an electrical connection (22) to said anode (18) and suitable to allow the electrochemical reaction of reduction of proton H⁺ and consequent production of hydrogen gas and release in solution of OH⁻ ions wherein said cathode (20) is contained in a cathode chamber (16; 116) suitable to contain or containing as a catholyte a basic solution, in particular an aqueous solution of NaOH;
(c) a system for feeding said anode chamber with said acidic solution;
(d) a system for feeding said cathode chamber with said basic solution;
(e) a cation exchange membrane (28; 128) impermeable for OH⁻ ions and permeable for cations, in particular Na⁺;
(f) an anion exchange membrane (26; 126) impermeable for H⁺ ions and permeable for anions, particularly Cl⁻;
wherein said anodic chamber (14; 114) and said cathodic chamber (16; 116) are separated by said cation exchange membrane (28; 128) and said anion exchange membrane (26; 126) which in turn are separated by a third chamber (12; 112) suitable for containing or containing an aqueous solution of chloride salt, in particular NaCl,
where
(α) said cation exchange membrane (28; 128) is simultaneously a wall or a portion thereof of said cathode chamber (16; 116) and of said third chamber (12; 112) such that from the third chamber (12; 112) to the cathode chamber (16; 116) a passage of salt cations, in particular Na+, is possible;
(β) said anion exchange membrane (26; 126) is simultaneously a wall or a portion thereof of said anode chamber (14; 114) and of said third chamber (12; 112) such that from the third chamber (12; 112) to the anode chamber (14; 114) a passage of salt anions, in particular Cl⁻, is possible;
wherein said electrodes (18, 20) are made of graphite and wherein the desalination device further comprises
(h) a carbonation reactor (50)
wherein the cathode chamber (16) comprises an inlet (38) and an outlet (40) which are connected in a circuit in which said carbonation reactor (50) is inserted.

2. Desalination device according to claim 1, **characterized in that** it is configured to perform the following algorithm:
(i) feeding the anode chamber (14; 114) with an anolyte, preferably water;
(ii) feeding the cathode chamber (16; 116) with a catholyte, preferably water or the base produced therein at reduced concentration;
(iii) feeding the third chamber (12; 112) with a concentrated chloride salt solution;
(iv) oxidation of OH⁻ on the anode (18) with the formation of oxygen O₂ and H⁺ protons;
(v) reduction of H⁺ on the cathode (20) with the formation of H₂ hydrogen and OH⁻ hydroxide ions.

3. Desalination device according to anyone of the preceding claims, **characterized in that** each of said chambers (12, 14, 16; 112, 114, 116) is provided with an inlet (30, 34, 38; 130, 134, 138) and an outlet (32, 36, 40; 132, 136, 140), namely:
(a) that the anode chamber (14; 114) is provided with an inlet (34; 134) for fresh anolyte and an outlet (36; 136) for anolyte enriched with salt anions, particularly Cl⁻, and oxygen;
(b) that the cathode chamber (16; 116) is provided with an inlet (38; 138) for the fresh catholyte and an outlet (40; 140) for the catholyte enriched in salt cations, particularly Na⁺, and hydrogen; and
(c) that the third chamber (12; 112) has an inlet (30; 130) for the aqueous starting salt solution and an outlet (32; 132) for the reduced concentration salt solution.

4. Desalination device according to any one of the preceding claims, **characterized in that** it further comprises
(g) a gas-liquid separation device, in particular a gas-liquid scrubber, suitable for recovering the hydrogen produced which is connected to the outlet of the cathode chamber (16; 116) and which preferably is connected to a fuel cell.

5. Desalination device according to any one of the preceding claims, **characterized in that** said at least one electrochemical cell comprises
(i) a first plate (166) supporting in a first window applied in said first plate said anode chamber (114) of meandering path having a thickness with respect to the plane of the meandering path extension preferably not exceeding 6 mm and having an inlet and an outlet for the anolyte at its ends;
(ii) a second plate (168) supporting in a second window applied to said second plate said central chamber (112) of meandering path having a thickness relative to the plane of the meandering path extension that preferably does not exceed 6 mm and having an inlet and outlet for saline solution at its ends; and
(iii) a third plate (170) supporting in a third window applied in said third plate said cathode chamber (116) of meandering path having a thickness with respect to the plane of the meandering path extension that preferably does not exceed 6 mm and having an inlet and outlet for the catholyte at its ends,
(iv) said anion exchange membrane (127) interposed between said first (166) and said second (168) plate;
(v) said cation exchange membrane (128) interposed between said second (168) and said third (170) plate;
(vi) a plate anode disposed alongside said first plate (168) on the opposite side from the position of said anion exchange membrane (127); and
(vii) a plate cathode disposed alongside said third plate (170) on the opposite side with respect to the position of the cation exchange membrane (128);
wherein plates, membranes and electrodes are superimposed in the following order: anode, anode chamber, anion exchange membrane, central chamber, cation exchange membrane, cathode,
wherein each plate is optionally provided with a plurality of first holes (172) arranged so that as the plates are overlapped, they are aligned so that they can be connected with relative fastening means;
wherein each plate is provided with a plurality of second holes divided into three pairs of holes (134, 136; 130, 132; 138, 140) for conveying in separate channels the flows of anolyte, catholyte and saline solution, one hole (134; 130; 138) of each pair provided for inlet of the respective flow into the system and the other hole (136; 132; 140) for exit from the system wherein the corresponding holes are arranged so that with the overlapping of the plates they result aligned to be able to connect them to form separate channels for the respective flows,
wherein each plate is preferably provided with a plurality of third holes (146, 147) for collecting gases formed in the anode and cathode chambers respectively (114, 116) and arranged in such a way that with the overlapping of the plates they result aligned to be able to connect them to form separate channels for the relative gas flows of the respective chambers,
in which each flow traverses along the channel formed by the relative overlapping holes the whole system, but only in the plate carrying the chamber to which the relative channel flow is dedicated a communication with the chamber inlet is realized in such a way as to allow the flow to pass through the chamber and enter through the chamber outlet into the corresponding outlet channel formed by the respective set of holes.

6. Desalination device according to claim 5, **characterized in that** it comprises a plurality of three-chamber electrochemical cells which is grouped into a cell stack according to
variant (A) wherein the individual elements follow each other according to the following scheme: [+AZC-][+AZC-]ₙ with n = 1, 2, ...,;
OR according to
variant (B) in which the individual elements follow each other according to the following scheme: +AZC-CZA+AZC-CZA+.....+AZC- with varying number of AZC- and CZA-groups in which units with three adjacent chambers have the corresponding electrode in common, wherein for both variants (A) and (B) A is a plate (166) with an anode chamber (114), Z is a plate (168) with a central chamber (112), C is a plate (170) with a cathode chamber (116), the "+" sign an anode and the "-" sign a cathode, an anion exchange membrane (127) is placed between adjacent chambers A and Z, and a cation exchange membrane (128) is placed between adjacent chambers Z and C; and
wherein for both variants (A) and (B) the chambers of the same type are connected through the relative inlets and outlets of the chambers and corresponding holes in the plates.

7. Desalination device according to any one of the preceding claims, **characterized in that** it comprises a plurality of electrochemical cells in a multipolar configuration in a stack containing the cells with alternating polarity.

8. Desalination device according to any one of the preceding claims, **characterized in that** it comprises pumping systems (42, 44, 64) with adjustable speed for feeding said chambers.

9. A desalination process comprising the following steps:
(a) providing a desalination device according to any one of the preceding claims;
(b1) feeding the anode chamber (14; 114) with an anolyte, preferably water;
(b2) feeding the cathode chamber (16; 116) with a catholyte, preferably water or the base produced therein at reduced concentration;
(b3) feeding of the third chamber (12; 112) with a concentrated chloride salt solution;
(c1) oxidation of OH⁻ on the anode (18) with the formation of oxygen O₂ and protons H⁺; (c2) reduction of H⁺ on the cathode (20) with the formation of hydrogen H₂ and hydroxide ions OH⁻;
(d1) in reaction to increased concentration of H⁺ ions in the anode chamber (14; 114) passage of salt anions, particularly chlorides, from the third chamber (12; 112) into the anode chamber (14; 114);
(d2) in reaction to the increased concentration of OH⁻ ions in the cathode chamber (16; 116) passage of salt cations, particularly Na⁺, from the third chamber (12; 112) into the cathode chamber (16; 116); wherein
feeding of the cathode chamber (16) and the extraction of its contents take place in a circuit from which hydrogen (46) is diverted, and wherein
carbonates and bicarbonates (56) are diverted from said carbonation reactor with the effect of buffering the pH of the basic solution which returns to the cathode chamber (16), preferably at values between 8.5 and 9.5.

10. Process according to claim 9, **characterized in that**
(i) the anode chamber (14; 114) is fed with controlled flow, in particular with an acid solution or water, and that acid solutions containing oxygen are extracted therefrom;
(ii) the cathode chamber (16; 116) is fed with controlled flow with a basic solution, particularly NaOH, or with water and that concentrated basic solutions and hydrogen are extracted therefrom;
(iii) the central chamber (12; 112) is fed at a controlled rate by concentrated salt solutions and that dilute salt solutions are extracted therefrom allowing control of the concentrations of the components of the aqueous solutions contained in the relevant chambers (12, 14, 16; 112, 114, 116).

11. Process according to any one of claims 9 or 10, **characterized in that** the feeding of the cathode chamber (16) and the extraction of its contents take place in a circuit from which hydrogen (46) is diverted feeding a fuel cell, in which the energy produced in the fuel cell is used to power the desalination device.

12. Process according to any one of claims from 9 to 11, **characterized in that** the flow of the saline solution to be treated is kept stable within the central chamber of each cell, in particular through the use of peristaltic metering pumps that are controlled using a Programmable Logic Controller (PLC) by monitoring the conductivity of the solution analysed at the point where it leaves the cell **and in that** inside the anode and cathode chamber the flow of the anolyte and of the catholyte is kept stable, in particualr through the use of peristaltic metering pumps managed via PLC by monitoring the pH of the same solutions analysed at the point where they exit the cell.

13. Use of the desalination device according to any one of claims 2-8 for reducing the concentration of chlorides in brackish water, industrial waste, mining, water treatment, or marine waters for one or more purposes selected from the group consisting of:
- production of carbonates and/or bicarbonates;
- removal of CO₂ from the atmosphere;
- production of hydrogen for the purpose of producing energy.

## Patentansprüche

1. Entsalzungsvorrichtung mit mindestens einer elektrochemischen Zelle (10), umfassend:
(a) eine Anode (18), die geeignet ist, die elektrochemische Reaktion der Oxidation des OH⁻-Ions und die daraus folgende Erzeugung von Sauerstoffgas und die Freisetzung von Protonen H⁺ in Lösung zu ermöglichen, wobei besagte Anode (18) in einer Anodenkammer (14; 114) enthalten ist, die geeignet ist, eine saure Lösung als Anolyten zu enthalten oder eine saure Lösung als Anolyten enthält;
(b) eine Kathode (20), die über eine elektrische Verbindung (22) mit besagter Anode (18) verbunden ist und geeignet ist, die elektrochemische Reaktion der Reduktion von Protonen H⁺ und die daraus folgende Erzeugung von Wasserstoffgas und die Freisetzung von OH⁻-Ionen in Lösung zu ermöglichen, wobei besagte Kathode (20) in einer Kathodenkammer (16; 116) enthalten ist, die geeignet ist, eine basische Lösung, insbesondere eine wässrige Lösung von NaOH, als Katholyten zu enthalten oder eine basische Lösung, insbesondere eine wässrige Lösung von NaOH, als Katholyten enthält;
(c) ein System zur Speisung der Anodenkammer mit besagter saurer Lösung;
(d) ein System zur Speisung der Kathodenkammer mit besagter basischer Lösung;
(e) eine Kationenaustauschermembran (28; 128), die für OH⁻-Ionen undurchlässig und für Kationen, insbesondere Na⁺, durchlässig ist;
(f) eine Anionenaustauschermembran (26; 126), die für H⁺-Ionen undurchlässig ist und für Anionen, insbesondere Cl⁻, durchlässig ist;
wobei besagte Anodenkammer (14; 114) und besagte Kathodenkammer (16; 116) durch besagte Kationenaustauschermembran (28; 128) und besagte Anionenaustauschermembran (26; 126) getrennt sind, die ihrerseits durch eine dritte Kammer (12; 112) getrennt sind, die geeignet ist, eine wässrige Lösung von Chloridsalz, insbesondere NaCl, zu enthalten oder eine wässrige Lösung von Chloridsalz, insbesondere NaCl enthält,
wobei
(α) besagte Kationenaustauschermembran (28; 128) gleichzeitig eine Wand oder ein Teil davon der besagten Kathodenkammer (16; 116) und der besagten dritten Kammer (12; 112) ist, so dass von der dritten Kammer (12; 112) zur Kathodenkammer (16; 116) ein Durchgang von Salzkationen, insbesondere Na⁺, möglich ist;
(β) besagte Anionenaustauschermembran (26; 126) gleichzeitig eine Wand oder ein Teil davon der besagten Anodenkammer (14; 114) und der besagten dritten Kammer (12; 112) ist, so dass von der dritten Kammer (12; 112) zur Anodenkammer (14; 114) ein Durchgang von Salzanionen, insbesondere Cl⁻, möglich ist;
wobei besagte Elektroden (18, 20) aus Graphit gefertigt sind und wobei die Entsalzungsvorrichtung weiterhin umfasst
(h) einen Carbonatisierungsreaktor (50)
wobei die Kathodenkammer (16) einen Einlass (38) und einen Auslass (40) umfasst, die in einem Kreislauf verbunden sind, in den der Carbonatisierungsreaktor (50) eingesetzt ist.

2. Entsalzungsvorrichtung gemäß Anspruch 1, **dadurch gekennzeichnet, dass** sie zur Durchführung des folgenden Algorithmus konfiguriert ist:
(i) Speisung der Anodenkammer (14; 114) mit einem Anolyten, vorzugsweise Wasser;
(ii) Speisung der Kathodenkammer (16; 116) mit einem Katholyten, vorzugsweise Wasser oder der darin hergestellten Base in reduzierter Konzentration;
(iii) Speisung der dritten Kammer (12; 112) mit einer konzentrierten Chloridsalzlösung;
(iv) Oxidation von OH⁻ an der Anode (18) unter Bildung von Sauerstoff O₂ und Protonen H⁺;
(v) Reduktion von H⁺ an der Kathode (20) unter Bildung von Wasserstoff H₂ und Hydroxid-Ionen OH⁻.

3. Entsalzungsvorrichtung gemäß einem beliebigen der vorhergehenden Ansprüche, **dadurch gekennzeichnet, dass** jede der Kammern (12, 14, 16; 112, 114, 116) mit einem Einlass (30, 34, 38; 130, 134, 138) und einem Auslass (32, 36, 40; 132, 136, 140) versehen ist, nämlich:
(a) dass die Anodenkammer (14; 114) mit einem Einlass (34; 134) für frischen Anolyten und einem Auslass (36; 136) für mit Salzanionen, insbesondere Cl⁻, und Sauerstoff angereicherten Anolyten versehen ist;
(b) dass die Kathodenkammer (16; 116) mit einem Einlass (38; 138) für den frischen Katholyten und einem Auslass (40; 140) für den mit Salzkationen, insbesondere Na⁺, und Wasserstoff angereicherten Katholyten versehen ist; und
(c) dass die dritte Kammer (12; 112) einen Einlass (30; 130) für die wässrige Ausgangssalzlösung und einen Auslass (32; 132) für die Salzlösung mit reduzierter Konzentration versehen ist.

4. Entsalzungsvorrichtung nach einem beliebigen der vorhergehenden Ansprüche, **dadurch gekennzeichnet, dass** sie ferner umfasst
(g) eine Gas-Flüssigkeits-Trennvorrichtung, insbesondere einen Gas-Flüssigkeits-Wäscher, der zur Rückgewinnung des erzeugten Wasserstoffs geeignet ist und der mit dem Ausgang der Kathodenkammer (16; 116) verbunden ist und der vorzugsweise mit einer Brennstoffzelle verbunden ist.

5. Entsalzungsvorrichtung nach einem beliebigen der vorhergehenden Ansprüche, **dadurch gekennzeichnet, dass** die mindestens eine elektrochemische Zelle umfasst:
(i) eine erste Platte (166), die in einem ersten Fenster, das in besagter ersten Platte angebracht ist, die Anodenkammer (114) mit mäanderförmigem Verlauf trägt, die eine Dicke in Bezug auf die Ebene der mäanderförmigen Verlaufserstreckung von vorzugsweise 6 mm nicht überschreitet und an ihren Enden einen Einlass und einen Auslass für den Anolyten besitzt;
(ii) eine zweite Platte (168), die in einem zweiten Fenster, das an besagter zweiten Platte angebracht ist, die zentrale Kammer (112) mit mäanderförmigem Verlauf trägt, die eine Dicke in Bezug auf die Ebene der mäanderförmigen Verlaufserstreckung aufweist, die vorzugsweise 6 mm nicht überschreitet, und die an ihren Enden einen Einlass und einen Auslass für Salzlösung aufweist; und
(iii) eine dritte Platte (170), die in einem dritten Fenster, das in der besagten dritten Platte angebracht ist, die besagte Kathodenkammer (116) mit mäanderförmigem Verlauf trägt, die eine Dicke in Bezug auf die Ebene der mäanderförmigen Verlaufserstreckung aufweist, die vorzugsweise 6 mm nicht überschreitet, und die an ihren Enden einen Einlass und einen Auslass für den Katholyten aufweist,
(iv) besagte Anionenaustauschermembran (127) zwischen besagter ersten (166) und besagter zweiten (168) Platte angeordnet ist;
(v) besagte Kationenaustauschermembran (128) zwischen besagter zweiten (168) und besagter dritten (170) Platte angeordnet ist;
(vi) eine Plattenanode, die längs der ersten Platte (168) auf der der Position der Anionenaustauschermembran (127) gegenüberliegenden Seite angeordnet ist; und
(vii) eine Plattenkathode, die längs der dritten Platte (170) auf der gegenüberliegenden Seite in Bezug auf die Position der Kationenaustauschmembran (128) angeordnet ist;
wobei Platten, Membranen und Elektroden in der folgenden Reihenfolge übereinander angeordnet sind: Anode, Anodenkammer, Anionenaustauschermembran, zentrale Kammer, Kationenaustauschermembran, Kathode,
wobei jede Platte optional mit einer Vielzahl von ersten Löchern (172) versehen ist, die so angeordnet sind, dass die Platten, wenn sie sich überlappen, so fluchten, dass sie mit entsprechenden Befestigungsmitteln verbunden werden können;
wobei jede Platte mit einer Vielzahl von zweiten Löchern versehen ist, die in drei Paare von Löchern (134, 136; 130, 132; 138, 140) unterteilt sind, um die Ströme von Anolyt, Katholyt und Salzlösung in getrennten Kanälen zu befördern, wobei ein Loch (134; 130; 138) jeden Paares für den Einlass des jeweiligen Stroms in das System und das andere Loch (136; 132; 140) für den Auslass aus dem System vorgesehen ist, wobei die korrespondierenden Löcher so angeordnet sind, dass sie bei der Überlappung der Platten so fluchten, dass sie verbunden werden können, um getrennte Kanäle für die jeweiligen Ströme zu bilden,
wobei jede Platte vorzugsweise mit einer Vielzahl von dritten Löchern (146, 147) zum Sammeln von Gasen versehen ist, die in den Anoden- bzw. Kathodenkammern (114, 116) gebildet werden, und die so angeordnet sind, dass sie bei der Überlappung der Platten so fluchten, dass sie verbunden werden können, um getrennte Kanäle für die jeweiligen Gasströme der jeweiligen Kammern zu bilden,
wobei jede Strömung entlang des Kanals, der durch die jeweiligen überlappenden Löcher gebildet wird, durch das gesamte System fließt, aber nur in der Platte, die die Kammer trägt, der die jeweilige Kanalströmung zugeordnet ist, eine Verbindung mit dem Kammereinlass derart realisiert wird, dass die Strömung durch die Kammer hindurchgehen und durch den Kammerauslass in den entsprechenden Auslasskanal eintreten kann, der durch den jeweiligen Satz von Löchern gebildet wird.

6. Entsalzungsvorrichtung gemäß Anspruch 5, **dadurch gekennzeichnet, dass** sie eine Vielzahl von elektrochemischen Dreikammerzellen umfasst, die zu einem Zellenstapel nach der
Variante (A) gruppiert ist, wobei die einzelnen Elemente nach folgendem Schema aufeinander folgen: [+AZC-][+AZC-]ₙ mit n = 1, 2, ...,;
ODER gemäß
Variante (B) gruppiert ist, in der die einzelnen Elemente nach folgendem Schema aufeinander folgen: +AZC-CZA+AZC-CZA+.....+AZC- mit unterschiedlicher Anzahl von AZC- und CZA-Gruppen, wobei Einheiten mit drei benachbarten Kammern die entsprechende Elektrode gemeinsam haben,
wobei für beide Varianten (A) und (B) A eine Platte (166) mit einer Anodenkammer (114) ist, Z eine Platte (168) mit einer zentralen Kammer (112) ist, C eine Platte (170) mit einer Kathodenkammer (116) ist, das "+-Zeichen eine Anode und das "-"-Zeichen eine Kathode ist, eine Anionenaustauschermembran (127) zwischen benachbarten Kammern A und Z angeordnet ist, und eine Kationenaustauschermembran (128) zwischen benachbarten Kammern Z und C angeordnet ist; und
wobei für beide Varianten (A) und (B) die Kammern desselben Typs durch die jeweiligen Einlässe und Auslässe der Kammern und entsprechende Löcher in den Platten verbunden sind.

7. Entsalzungsvorrichtung gemäß einem der vorhergehenden Ansprüche, **dadurch gekennzeichnet, dass** sie eine Vielzahl von elektrochemischen Zellen in einer multipolaren Konfiguration in einem Stapel umfasst, der die Zellen mit wechselnder Polarität enthält.

8. Entsalzungsvorrichtung gemäß einem der vorhergehenden Ansprüche, **dadurch gekennzeichnet, dass** sie Pumpensysteme (42, 44, 64) mit einstellbarer Geschwindigkeit zur Versorgung besagter Kammern umfasst.

9. Entsalzungsverfahren, umfassend die folgenden Schritte:
(a) Bereitstellen einer Entsalzungsvorrichtung gemäß einem beliebigen der vorhergehenden Ansprüche;
(b1) Speisung der Anodenkammer (14; 114) mit einem Anolyten, vorzugsweise Wasser;
(b2) Speisung der Kathodenkammer (16; 116) mit einem Katholyten, vorzugsweise Wasser oder der darin erzeugten Base in reduzierter Konzentration;
(b3) Speisung der dritten Kammer (12; 112) mit einer konzentrierten Chloridsalzlösung;
(c1) Oxidation von OH⁻ an der Anode (18) unter Bildung von Sauerstoff O₂ und Protonen H⁺; (c2) Reduktion von H⁺ an der Kathode (20) unter Bildung von Wasserstoff H₂ und Hydroxid-Ionen OH⁻;
(d1) als Reaktion auf eine erhöhte Konzentration von H⁺-Ionen in der Anodenkammer (14; 114) Übergang von Salzanionen, insbesondere Chloriden, aus der dritten Kammer (12; 112) in die Anodenkammer (14; 114);
(d2) in Reaktion auf die erhöhte Konzentration von OH⁻-Ionen in der Kathodenkammer (16; 116) Übergang von Salzkationen, insbesondere Na⁺, aus der dritten Kammer (12; 112) in die Kathodenkammer (16; 116); worin
die Speisung der Kathodenkammer (16) und die Extraktion ihrer Inhalte in einem Kreislauf stattfinden, von dem Wasserstoff (46) abgezweigt wird, und worin
Carbonate und Bicarbonate (56) aus besagtem Carbonatisierungsreaktor abgeleitet werden, mit der Wirkung, den pH-Wert der basischen Lösung, die in die Kathodenkammer (16) zurückkehrt, vorzugsweise auf Werte zwischen 8,5 und 9,5 zu puffern.

10. Verfahren gemäß Anspruch 9, **dadurch gekennzeichnet, dass**
(i) die Anodenkammer (14; 114) mit kontrollierter Strömung, insbesondere mit einer sauren Lösung oder mit Wasser, gespeist wird und dass daraus sauerstoffhaltige saure Lösungen extrahiert werden;
(ii) die Kathodenkammer (16; 116) mit kontrollierter Strömung mit einer basischen Lösung, insbesondere NaOH, oder mit Wasser gespeist wird und dass konzentrierte basische Lösungen und Wasserstoff daraus extrahiert werden;
(iii) die zentrale Kammer (12; 112) mit einer kontrollierten Geschwindigkeit mit konzentrierten Salzlösungen gespeist wird und dass daraus verdünnte Salzlösungen extrahiert werden, was die Kontrolle der Konzentrationen der Komponenten der in den relevanten Kammern (12, 14, 16; 112, 114, 116) enthaltenen wässrigen Lösungen ermöglicht.

11. Verfahren gemäß einem der Ansprüche 9 oder 10, **dadurch gekennzeichnet, dass** die Speisung der Kathodenkammer (16) und die Extraktion ihres Inhalts in einem Kreislauf erfolgt, aus dem Wasserstoff (46) abgezweigt wird, der eine Brennstoffzelle speist, in der die in der Brennstoffzelle erzeugte Energie zum Betrieb der Entsalzungsvorrichtung verwendet wird.

12. Verfahren gemäß einem der Ansprüche 9 bis 11, **dadurch gekennzeichnet, dass** der Fluss der zu behandelnden Salzlösung innerhalb der zentralen Kammer jeder Zelle stabil gehalten wird, insbesondere durch die Verwendung von peristaltischen Dosierpumpen, die über eine speicherprogrammierbare Steuerung (SPS) durch Überwachung der Leitfähigkeit der analysierten Lösung an dem Punkt, an dem sie die Zelle verlässt, gesteuert werden, **und dadurch, dass** innerhalb der Anoden- und der Kathodenkammer der Fluss des Anolyten und des Katholyten stabil gehalten wird, insbesondere durch die Verwendung von peristaltischen Dosierpumpen, die über eine SPS durch Überwachung des pH-Werts der gleichen Lösungen, die an dem Punkt, an dem sie die Zelle verlassen, analysiert werden, gesteuert werden.

13. Verwendung der Entsalzungsvorrichtung nach einem beliebigen der Ansprüche 2 - 8 zur Verringerung der Chloridkonzentration in Brackwasser, Industrieabwasser, Bergbau, Wasseraufbereitung oder Meerwasser für einen oder mehrere Zwecke, ausgewählt aus der Gruppe bestehend aus:
- Herstellung von Carbonaten und/oder Bicarbonaten;
- Entfernung von CO₂ aus der Atmosphäre;
- Herstellung von Wasserstoff für die Energieerzeugung.

## Revendications

1. Dispositif de dessalement comprenant au moins une cellule électrochimique (10) comprenant:
(a) une anode (18) apte à permettre la réaction électrochimique d'oxydation de l'ion OH⁻ et la production conséquente d'oxygène gazeux et la libération en solution de protons H⁺ dans laquelle ladite anode (18) est contenue dans une chambre anodique (14; 114) apte à contenir ou contenant comme anolyte une solution acide ;
(b) une cathode (20) reliée par une connexion électrique (22) à ladite anode (18) et apte à permettre la réaction électrochimique de réduction des protons H⁺ et la production conséquente d'hydrogène gazeux et la libération en solution d'ions OH⁻, ladite cathode (20) étant contenue dans une chambre cathodique (16; 116) apte à contenir ou contenant comme catholyte une solution basique, en particulier une solution aqueuse de NaOH;
(c) un système d'alimentation de ladite chambre anodique avec ladite solution acide;
(d) un système d'alimentation de ladite chambre cathodique avec ladite solution basique;
(e) une membrane à échange de cations (28; 128) imperméable aux ions OH⁻ et perméable aux cations, en particulier Na⁺;
(f) une membrane à échange d'anions (26; 126) imperméable aux ions H⁺ et perméable aux anions, en particulier Cl⁻;
dans laquelle ladite chambre anodique (14; 114) et ladite chambre cathodique (16; 116) sont séparées par ladite membrane à échange de cations (28; 128) et ladite membrane à échange d'anions (26; 126) qui sont à leur tour séparées par une troisième chambre (12; 112) apte à contenir ou contenant une solution aqueuse de sel de chlorure, en particulier de NaCl, où (α) ladite membrane à échange de cations (28; 128) est simultanément une paroi ou une partie de celle-ci de ladite chambre cathodique (16; 116) et de ladite troisième chambre (12 ; 112) de telle sorte que de la troisième chambre (12; 112) à la chambre cathodique (16 ; 116) un passage de cations salins, en particulier Na⁺, est possible ;
(β) ladite membrane à échange d'anions (26; 126) est simultanément une paroi ou une partie de celle-ci de ladite chambre anodique (14; 114) et de ladite troisième chambre (12; 112) de telle sorte que de la troisième chambre (12; 112) à la chambre anodique (14; 114) un passage d'anions salins, en particulier Cl⁻, est possible;
où lesdites électrodes (18, 20) sont en graphite et où le dispositif de dessalement comprend en outre
(h) un réacteur de carbonatation (50)
où la chambre cathodique (16) comprend une entrée (38) et une sortie (40) qui sont reliées dans un circuit dans lequel ledit réacteur de carbonatation (50) est inséré.

2. Dispositif de dessalement selon la revendication 1, **caractérisé en ce qu'**il est configuré pour exécuter l'algorithme suivant:
(i) alimenter la chambre anodique (14; 114) avec un anolyte, de préférence de l'eau;
(ii) alimenter la chambre cathodique (16; 116) avec un catholyte, de préférence de l'eau ou la base qui y est produite à une concentration réduite;
(iii) alimenter la troisième chambre (12; 112) avec une solution concentrée de sel de chlorure;
(iv) oxydation de OH⁻ sur l'anode (18) avec formation d'oxygène O₂ et de protons H⁺;
(v) réduction de H⁺ sur la cathode (20) avec formation d'hydrogène H₂ et de ions hydroxyde OH⁻.

3. Dispositif de dessalement selon l'une quelconque des revendications précédentes, **caractérisé en ce que** chacune desdites chambres (12, 14, 16; 112, 114, 116) est pourvue d'une entrée (30, 34, 38; 130, 134, 138) et d'une sortie (32, 36, 40; 132, 136, 140), à savoir:
(a) la chambre anodique (14; 114) est pourvue d'une entrée (34; 134) pour l'anolyte frais et d'une sortie (36; 136) pour l'anolyte enrichi d'anions salins, en particulier de Cl⁻, et d'oxygène;
(b) la chambre cathodique (16; 116) est pourvue d'une entrée (38; 138) pour le catholyte frais et d'une sortie (40; 140) pour le catholyte enrichi en cations salins, en particulier Na⁺, et en hydrogène; et
(c) la troisième chambre (12; 112) possède une entrée (30; 130) pour la solution saline aqueuse de départ et une sortie (32; 132) pour la solution saline à concentration réduite.

4. Dispositif de dessalement selon l'une quelconque des revendications précédentes, **caractérisé en ce qu'**il comprend en outre
(g) un dispositif de séparation gaz-liquide, en particulier un laveur gaz-liquide, apte à récupérer l'hydrogène produit qui est connecté à la sortie de la chambre cathodique (16; 116) et qui est de préférence connecté à une pile à combustible.

5. Dispositif de dessalement selon l'une quelconque des revendications précédentes, **caractérisé en ce que** ladite au moins une cellule électrochimique comprend
(i) une première plaque (166) supportant dans une première fenêtre appliquée à ladite première plaque ladite chambre anodique (114) de parcours sinueux ayant une épaisseur par rapport au plan d'extension du parcours sinueux de préférence n'excédant pas 6 mm et ayant à ses extrémités une entrée et une sortie pour l'anolyte;
(ii) une deuxième plaque (168) supportant dans une deuxième fenêtre appliquée à ladite deuxième plaque ladite chambre centrale (112) de parcours sinueux ayant une épaisseur par rapport au plan de l'extension du parcours sinueux de préférence n'excédant pas 6 mm et ayant une entrée et une sortie pour la solution saline à ses extrémités; et
(iii) une troisième plaque (170) supportant dans une troisième fenêtre appliquée dans ladite troisième plaque ladite chambre cathodique (116) du parcours sinueux ayant une épaisseur par rapport au plan de l'extension du parcours sinueux de préférence n'excédant pas 6 mm et ayant une entrée et une sortie pour le catholyte à ses extrémités,
(iv) ladite membrane à échange d'anions (127) interposée entre ladite première (166) et ladite deuxième (168) plaque;
(v) ladite membrane à échange de cations (128) interposée entre ladite deuxième (168) et ladite troisième (170) plaque;
(vi) une anode de plaque disposée le long de ladite première plaque (168) du côté opposé à la position de ladite membrane à échange d'anions (127); et
(vii) une cathode de plaque disposée le long de ladite troisième plaque (170) du côté opposé à la position de la membrane à échange de cations (128);
les plaques, membranes et électrodes étant superposées dans l'ordre suivant : anode, chambre anodique, membrane à échange d'anions, chambre centrale, membrane à échange de cations, cathode,
où chaque plaque est optionnellement pourvue d'une pluralité de premiers trous (172) disposés de telle sorte que lorsque les plaques se chevauchent, elles sont alignées de manière à pouvoir être reliées par des moyens de fixation relatifs;
où chaque plaque est pourvue d'une pluralité de seconds trous divisés en trois paires de trous (134, 136; 130, 132; 138, 140) pour transporter dans des canaux séparés les flux d'anolyte, de catholyte et de solution saline, un trou (134 ; 130 ; 138) de chaque paire étant prévu pour l'entrée du flux respectif dans le système et l'autre trou (136; 132; 140) pour la sortie du système, les trous correspondants étant disposés de telle sorte qu'avec le chevauchement des plaques, ils s'alignent pour pouvoir les relier afin de former des canaux séparés pour les flux respectifs,
où chaque plaque est de préférence pourvue d'une pluralité de troisièmes trous (146, 147) pour recueillir les gaz formés dans les chambres anodiques et cathodiques respectivement (114, 116) et disposés de telle sorte qu'avec le chevauchement des plaques, ils s'alignent pour pouvoir les relier et former des canaux séparés pour les flux de gaz relatifs des chambres respectives,
où chaque flux traverse tout le système le long du canal formé par les trous relatifs qui se chevauchent, mais seulement dans la plaque portant la chambre à laquelle le flux relatif du canal est dédié, une communication avec l'entrée de la chambre est réalisée de manière à permettre au flux de passer à travers la chambre et d'entrer par la sortie de la chambre dans le canal de sortie correspondant formé par l'ensemble respectif de trous.

6. Dispositif de dessalement selon la revendication 5, **caractérisé en ce qu'**il comprend une pluralité de cellules électrochimiques à trois chambres, regroupées en une pile de cellules selon la variante (A), dans laquelle les éléments individuels se succèdent selon le schéma suivant:
[+AZC-][+AZC-]ₙ avec n = 1, 2, ..., ;
OU selon
variante (B) dans laquelle les éléments individuels se succèdent selon le schéma suivant:
+AZC-CZA+AZC-CZA+.....+AZC- avec un nombre variable de groupes AZC- et CZA dans lesquels les unités à trois chambres adjacentes ont en commun l'électrode correspondante,
où, pour les deux variantes (A) et (B), A est une plaque (166) avec une chambre anodique (114), Z est une plaque (168) avec une chambre centrale (112), C est une plaque (170) avec une chambre cathodique (116), le signe « + " une anode et le signe " - » une cathode, une membrane à échange d'anions (127) est placée entre les chambres adjacentes A et Z, et une membrane à échange de cations (128) est placée entre les chambres adjacentes Z et C; et
où, pour les deux variantes (A) et (B), les chambres du même type sont reliées par les entrées et sorties relatives des chambres et les trous correspondants dans les plaques.

7. Dispositif de dessalement selon l'une quelconque des revendications précédentes, **caractérisé en ce qu'**il comprend une pluralité de cellules électrochimiques en configuration multipolaire dans un empilement contenant les cellules à polarité alternée.

8. Dispositif de dessalement selon l'une quelconque des revendications précédentes, **caractérisé en ce qu'**il comprend des systèmes de pompage (42, 44, 64) à vitesse réglable pour l'alimentation desdites chambres.

9. Procédé de dessalement comprenant les étapes suivantes:
(a) fournir un dispositif de dessalement selon l'une quelconque des revendications précédentes;
(b1) alimenter la chambre anodique (14; 114) avec un anolyte, de préférence de l'eau ;
(b2) alimenter la chambre cathodique (16; 116) avec un catholyte, de préférence de l'eau ou la base qui y est produite à une concentration réduite;
(b3) alimentation de la troisième chambre (12; 112) avec une solution concentrée de sel de chlorure;
(c1) oxydation de OH⁻ sur l'anode (18) avec formation d'oxygène O₂ et de protons H⁺;
(c2) réduction de H⁺ sur la cathode (20) avec formation d'hydrogène H₂ et d'ions hydroxyde OH⁻;
(d1) en réaction à une concentration accrue d'ions H⁺ dans la chambre anodique (14; 114), passage d'anions salins, en particulier de chlorures, de la troisième chambre (12; 112) dans la chambre anodique (14; 114);
(d2) en réaction à la concentration accrue d'ions OH⁻ dans la chambre cathodique (16; 116) passage de cations salins, en particulier Na⁺, de la troisième chambre (12; 112) dans la chambre cathodique (16; 116); où
l'alimentation de la chambre cathodique (16) et l'extraction de son contenu ont lieu dans un circuit à partir duquel l'hydrogène (46) est détourné, et où
les carbonates et bicarbonates (56) sont détournés dudit réacteur de carbonatation avec pour effet de tamponner le pH de la solution basique qui retourne dans la chambre cathodique (16), de préférence à des valeurs comprises entre 8,5 et 9,5.

10. Procédé selon la revendication 9, **caractérisé en ce que**
(i) la chambre anodique (14; 114) est alimentée à flux contrôlé, en particulier par une solution acide ou de l'eau, et que des solutions acides contenant de l'oxygène en sont extraites;
(ii) la chambre cathodique (16; 116) est alimentée à flux contrôlé par une solution basique, en particulier NaOH, ou par de l'eau, et que des solutions basiques concentrées et de l'hydrogène en sont extraits;
(iii) la chambre centrale (12; 112) est alimentée à un flux contrôlé par des solutions salines concentrées et des solutions salines diluées en sont extraites, ce qui permet de contrôler les concentrations des composants des solutions aqueuses contenues dans les chambres concernées (12, 14, 16; 112, 114, 116).

11. Procédé selon l'une quelconque des revendications 9 ou 10, **caractérisé en ce que** l'alimentation de la chambre cathodique (16) et l'extraction de son contenu ont lieu dans un circuit à partir duquel l'hydrogène (46) est détourné pour alimenter une pile à combustible, dans laquelle l'énergie produite dans la pile à combustible est utilisée pour alimenter le dispositif de dessalement.

12. Procédé selon l'une quelconque des revendications 9 à 11, **caractérisé en ce que** le flux de la solution saline à traiter est maintenu stable à l'intérieur de la chambre centrale de chaque cellule, en particulier par l'utilisation de pompes doseuses péristaltiques gérées par un automate programmable (PLC) en contrôlant la conductivité de la solution analysée au point de sortie de la cellule **et en ce que,** à l'intérieur de la chambre anodique et de la chambre cathodique, le flux de l'anolyte et du catholyte est maintenu stable, en particulier par l'utilisation de pompes doseuses péristaltiques gérées par PLC en contrôlant le pH de ces mêmes solutions analysées au point de sortie de la cellule.

13. Utilisation du dispositif de dessalement selon l'une quelconque des revendications 2 - 8 pour réduire la concentration de chlorures dans les eaux saumâtres, les déchets industriels, les eaux minières, les eaux de traitement des eaux ou les eaux marines pour un ou plusieurs objectifs choisis dans le groupe constitué par:
- la production de carbonates et/ou de bicarbonates;
- l'élimination du CO2 de l'atmosphère;
- la production d'hydrogène dans le but de produire de l'énergie.
